(19) Europäisches Patentamt
European Patent Office
Office européen des brevets

(11) EP 1 723 851 B1

(12) EUROPÄISCHE PATENTSCHRIFT

(45) Veröffentlichungstag und Bekanntmachung des Hinweises auf die Patenterteilung:
**09.09.2009 Patentblatt 2009/37**

(51) Int Cl.:
***A01N 47/36*** *(2006.01)* ***A01N 33/18*** *(2006.01)*
***A01N 41/10*** *(2006.01)* ***A01N 41/06*** *(2006.01)*
***A01P 13/02*** *(2006.01)*

(21) Anmeldenummer: **06119631.7**

(22) Anmeldetag: **12.09.1996**

(54) **Synergistische herbizide Mischungen, die ein Derivat eines Suflonylharnstoffes und ein Dinitroanilin enthalten**

Synergistic herbicidal mixtures comprising a sulphonyl urea derivative and a dinitroaniline

Mélanges herbicides synergiques comprenant un dérivé sulphonyl urée et un dinitroaniline

(84) Benannte Vertragsstaaten:
**AT BE CH DE DK ES FI FR GB GR IE IT LI NL PT SE**
Benannte Erstreckungsstaaten:
**LV SI**

(30) Priorität: **20.09.1995 DE 19534910**

(43) Veröffentlichungstag der Anmeldung:
**22.11.2006 Patentblatt 2006/47**

(62) Dokumentnummer(n) der früheren Anmeldung(en) nach Art. 76 EPÜ:
**04019639.6 / 1 477 063**
**96932502.6 / 0 859 548**

(73) Patentinhaber: **BASF SE**
**67056 Ludwigshafen (DE)**

(72) Erfinder:
- **Landes, Max**
  **Visalia, CA 93291 (US)**
- **Sievernich, Bernd**
  **67454 Haßloch (DE)**
- **Kibler, Elmar**
  **67454 Haßloch (DE)**
- **Nuyken, Wessel**
  **67166 Otterstadt (DE)**
- **Walter, Helmut**
  **67283 Obrigheim (DE)**
- **Westphalen, Karl-Otto**
  **67346 Speyer (DE)**
- **Mayer, Horst**
  **67069 Ludwigshafen (DE)**
- **Haden, Egon**
  **67259 Kleinniedesheim (DE)**
- **Mulder, Christiaan**
  **1200 Nelspruit (ZA)**
- **Schönhammer, Alfons**
  **67271 Mertesheim (DE)**
- **Hamprecht, Gerhard**
  **69469 Weinheim (DE)**

(56) Entgegenhaltungen:
**EP-A- 0 291 851** **EP-A- 0 388 873**
**EP-A- 0 446 743** **WO-A-92/09608**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 723 851 B1

## Beschreibung

Die vorliegende Erfindung betrifft eine herbizide Mischung mit synergistischer Wirkung aus einem Derivat des Sulfonylharnstoffs (a) der Formel I und einem oder mehreren herbiziden Verbindungen b17.

Sulfonylharnstoffe der Formel I mit herbizider Wirkung sind aus dem Stand der Technik, z.B. aus EP-388 873, EP-559 814, EP-291 851 und DE-40 07 683 und den Conference Proceedings "Fluorine in Agriculture", 9.-11. Januar 1995, Manchester, Kap. "New Fluoro Intermediates for Herbicidal Sulfonylureas" bekannt.

Herbizide Verbindungen b17 sind z.B. in "Short Review of Herbicides & PGRs 1991", Hodogaya Chemicals beschrieben siehe "Benefin" S. 54, "Butralin" S. 58, "Dinitramin" S. 56, "Ethalfluralin" S. 60, "Fluchloralin" S. 54, "Prodiamine" S. 62, "Oryzalin" S. 60, "Profluralin" S. 54, "Trifluralin" S. 54, Nitralin, S. 58, Isopropalin.

Bei Pflanzenschutzmitteln ist es grundsätzlich wünschenswert, die spezifische Wirkung eines Wirkstoffs und die Wirkungssicherheit zu erhöhen. Der Erfindung lag daher die Aufgabe zugrunde, die Wirkung von bekannten herbizid wirksamen Sulfonylharnstoffen der Formel I zu erhöhen.

Demgemäß wurde eine herbizide Mischung gefunden, die

a) mindestens ein Derivat des Sufonylharnstoffs der Formel I

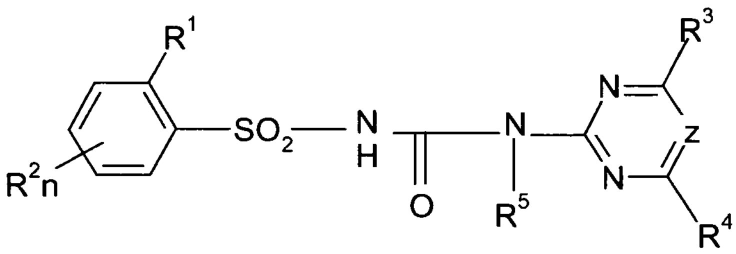

(I),

in der die Substituenten folgende Bedeutung haben:

$R^1$ $C_1$-$C_6$-Alkyl, das eine bis fünf der folgenden Gruppen tragen kann: Methoxy, Ethoxy, $SO_2CH_3$, Cyano, Chlor, Fluor, $SCH_3$, $S(O)CH_3$;
Halogen;
eine Gruppe $ER^6$, in der E O, S oder $NR^7$ bedeutet;
$COOR^8$;
$NO_2$;
$S(O)_oR^9$, $SO_2NR^{10}R^{11}$, $CONR^{101}R^{11}$;

$R^2$ Wasserstoff, $C_1$-$C_4$-Alkyl, $C_2$-$C_4$-Alkenyl, $C_2$-$C_4$-Alkinyl, Halogen, $C_1$-$C_4$-Alkoxy, $C_1$-$C_4$-Halogenalkoxy; $C_1$-$C_4$-Halogenalkyl, eine $C_1$-$C_2$-Alkylsulfonylgruppe, Nitro, Cyano oder $C_1$-$C_4$-Alkylthio,

$R^3$ F, $CH_3$, $CF_2Cl$, $CF_2H$, $OCF_3$, $OCF_2Cl$ oder falls $R^1$ für $CO_2CH_3$ und gleichzeitig $R^2$ für Fluor stehen, Cl, oder, falls $R^1$ für $CH_2CF_3$ oder $CF_2CF_3$ steht, Methyl, oder falls $R^4$ für $OCF_3$ oder $OCF_2Cl$ steht, $OCF_2H$ oder $OCF_2Br$;

$R^4$ $C_1$-$C_2$-Alkoxy, $C_1$-$C_2$-Alkyl, $C_1$-$C_2$-Alkylthio, $C_1$-$C_2$-Alkylamino, Di-$C_1$-$C_2$-Alkylamino, Halogen, $C_1$-$C_2$-Halogenalkyl, $C_1$-$C_2$-Halogenalkoxy,

$R^5$ Wasserstoff, $C_1$-$C_2$-Alkoxy, $C_1$-$C_4$-Alkyl;

$R^6$ $C_1$-$C_4$-Alkyl, $C_2$-$C_4$-Alkenyl, $C_2$-$C_4$-Alkinyl oder $C_3$-$C_6$-Cycloalkyl, welche 1 bis 5 Halogenatome tragen können, mit Ausnahme von Allyl, Difluormethoxy, Chlordifluormethoxy und 2-Chlorethoxy, falls E O oder S bedeutet. Ferner bedeutet $R^6$ im Falle, das E für O oder $NR^7$ steht, noch Methylsulfonyl, Ethylsulfonyl, Trifluormethylsulfonyl, Allylsulfonyl, Propargylsulfonyl oder Dimethylsulfamoyl;

$R^7$ Wasserstoff, Methyl oder Ethyl

$R^8$ eine $C_1$-$C_6$-Alkylgruppe, welche bis zu drei der folgenden Reste tragen kann: Halogen, $C_1$-$C_4$-Alkoxy, $C_1$-$C_4$-Alkylthio, $C_1$-$C_4$-Halogenalkoxy, $C_1$-$C_4$-Alkoxy-$C_1$-$C_2$-alkoxy, $C_3$-$C_7$-Cycloalkyl und/oder Phenyl; eine $C_5$-$C_7$-Cy-

cloalkylgruppe, welche bis zu drei $C_1$-$C_4$-Alkylgruppen tragen kann; $C_3$-$C_6$-Alkenyl oder $C_3$-$C_6$-Alkinyl;

$R^9$ eine $C_1$-$C_6$-Alkylgruppe, welche einen bis drei der folgenden Reste tragen kann: Halogen, $C_1$-$C_4$-Alkoxy, $C_1$-$C_4$-Alkylthio, $C_1$-$C_4$-Halogenalkoxy, $C_1$-$C_4$-Alkoxy-$C_1$-$C_2$-alkoxy, $C_3$-$C_7$-Cycloalkyl und/oder Phenyl; eine $C_5$-$C_7$-Cycloalkylgruppe, welche ein bis drei $C_1$-$C_4$-Alkylgruppen tragen kann; eine $C_2$-$C_6$-Alkenylgruppe oder eine $C_3$-$C_6$-Alkinylgruppe;

$R^{10}$ Wasserstoff, eine $C_1$-$C_2$-Alkoxygruppe, eine $C_1$-$C_6$-Alkylgruppe, oder gemeinsam mit $R^{11}$ eine $C_4$-$C_6$-Alkylenkette, worin eine Methylengruppe durch ein Sauerstoffatom oder eine $C_1$-$C_4$-Alkinyliminogruppe ersetzt sein kann;

$R^{11}$ eine $C_1$-$C_4$-Alkylgruppe, welche ein bis vier Halogen- oder $C_1$-$C_4$-Alkoxyreste tragen kann; $C_3$-$C_6$-Cycloalkyl

n 0-3

o 1-2

z N, CH

und

b) eine synergistisch wirksame Menge mindestens einer herbiziden Verbindung aus der Gruppe b17 der Dinitroaniline: benefin, butralin, dinitramin, ethalfluralin, fluchloralin, isopropalin, nitralin, oryzalin, pendimethalin, prodiamine, profluralin, trifluralin

oder deren umweltverträglichen Salze enthält.

Die erfindungsgemäße herbizide Mischung zeigt eine überadditive synergistische Wirkung und ist für diejenigen Kulturpflanzen selektiv, für welche die Einzelverbindungen selbst auch verträglich sind.

Im Hinblick auf ihre synergistische herbizide Wirkung besonders bevorzugte Sulfonylharnstoffe der Formel I sind solche, in denen

$R^1$ $CO_2CH_3$, $CO_2C_2H_5$, $CO_2iC_3H_7$, $CF_3$, $CF_2H$; $OSO_2CH_3$, $OSO_2N(CH_3)_2$, Cl, $NO_2$, $SO_2N(CH_3)_2$, $SO_2CH_3$ und $N(CH_3)SO_2CH_3$

$R^2$ Wasserstoff, Cl, F oder $C_1$-$C_2$-Alkyl

$R^3$ $CF_2H$, $OCF_3$, $OCF_2Cl$, $CF_2Cl$, $CF_3$ oder F

$R^4$ $OCH_3$, $OC_2H_5$, $OCF_3$, $OCF_2Cl$; $CF_3$, Cl, F, $NH(CH_3)$, $N(CH_3)_2$ oder $C_1$-$C_2$-Alkyl

$R^5$ Wasserstoff

z N oder CH

n 0 oder 1 bedeuten.

Bevorzugte Verbindungen der Formel I sind in der folgenden Tabelle zusammengestellt.

Tabelle

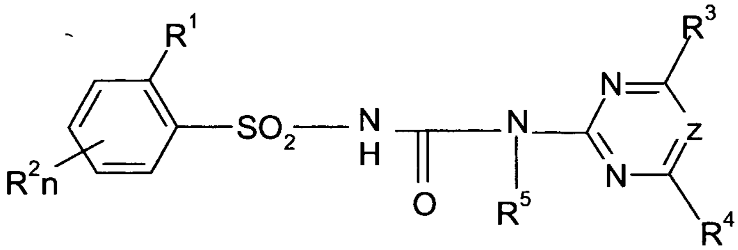

| Nr. | $R^1$ | $R^2$ | $R^5$ | $R^3$ | $R^4$ | Z |
|---|---|---|---|---|---|---|
| 1 | $CO_2CH_3$ | H | H | $OCF_2Cl$ | $OCH_3$ | CH |
| 2 | $CO_2CH_5$ | H | H | $OCF_2Cl$ | $OCH_3$ | CH |
| 3 | $CO_2iC_3H_7$ | H | H | $OCF_2Cl$ | $OCH_3$ | CH |
| 4 | $NO_2$ | H | H | $OCF_2Cl$ | $OCH_3$ | CH |
| 5 | $SO_2CH_3$ | H | H | $OCF_2Cl$ | $OCH_3$ | CH |
| 6 | $SO_2N(CH_3)_2$ | H | H | $OCF_2Cl$ | $OCH_3$ | CH |
| 7 | Cl | H | H | $OCF_2Cl$ | $OCH_3$ | CH |
| 8 | $N(CH_3)SO_2CH_3$ | H | H | $OCF_2Cl$ | $OCH_3$ | CH |
| 9 | $OSO_2CH_3$ | H | H | $OCF_2Cl$ | $OCH_3$ | CH |
| 10 | $OSO_2N(CH_3)_2$ | H | H | $OCF_2Cl$ | $OCH_3$ | CH |
| 11 | $CF_3$ | H | H | $OCF_2Cl$ | $OCH_3$ | CH |
| 12 | $CF_2H$ | H | H | $OCF_2Cl$ | $OCH_3$ | CH |
| 13 | $CO_2CH_3$ | H | H | $OCF_3$ | $OCH_3$ | CH |
| 14 | $CO_2C_2H_5$ | H | H | $OCF_3$ | $OCH_3$ | CH |
| 15 | $CO_2iC_3H_7$ | H | H | $OCF_3$ | $OCH_3$ | CH |
| 16 | $NO_2$ | H | H | $OCF_3$ | $OCH_3$ | CH |
| 17 | $SO_2CH_3$ | H | H | $OCF_3$ | $OCH_3$ | CH |
| 18 | $SO_2N(CH_3)_2$ | H | H | $OCF_3$ | $OCH_3$ | CH |
| 19 | Cl | H | H | $OCF_3$ | $OCH_3$ | CH |
| 20 | $N(CH_3)SO_2CH_3$ | H | H | $OCF_3$ | $OCH_3$ | CH |
| 21 | $OSO_2CH_3$ | H | H | $OCF_3$ | $OCH_3$ | CH |
| 22 | $OSO_2N(CH_3)_2$ | H | H | $OCF_3$ | $OCH_3$ | CH |
| 23 | $CF_3$ | H | H | $OCF_3$ | $OCH_3$ | CH |
| 24 | $CF_2H$ | H | H | $OCF_3$ | $OCH_3$ | CH |
| 25 | $CO_2CH_3$ | H | H | F | $OCH_3$ | CH |
| 26 | $CO_2C_2H_5$ | H | H | F | $OCH_3$ | CH |
| 27 | $CO_2iC_3H_7$ | H | H | F | $OCH_3$ | CH |
| 28 | $NO_2$ | H | H | F | $OCH_3$ | CH |
| 29 | $SO_2CH_3$ | H | H | F | $OCH_3$ | CH |
| 30 | $SO_2N(CH_3)_2$ | H | H | F | $OCH_3$ | CH |

(fortgesetzt)

| Nr. | $R^1$ | $R^2$ | $R^5$ | $R^3$ | $R^4$ | Z |
|---|---|---|---|---|---|---|
| 31 | Cl | H | H | F | $OCH_3$ | CH |
| 32 | $N(CH_3)SO_2CH_3$ | H | H | F | $OCH_3$ | CH |
| 33 | $OSO_2CH_3$ | H | H | F | $OCH_3$ | CH |
| 34 | $OSO_2N(CH_3)_2$ | H | H | F | $OCH_3$ | CH |
| 35 | $CF_3$ | H | H | F | $OCH_3$ | CH |
| 36 | $CF_2H$ | H | H | F | $OCH_3$ | CH |
| 37 | $CO_2CH_3$ | H | H | $CF_3$ | $OCH_3$ | N |
| 38 | $CO_2C_2H_5$ | H | H | $CF_3$ | $OCH_3$ | N |
| 39 | $CO_2iC_3H_7$ | H | H | $CF_3$ | $OCH_3$ | N |
| 40 | $NO_2$ | H | H | $CF_3$ | $OCH_3$ | N |
| 41 | $SO_2CH_3$ | H | H | $CF_3$ | $OCH_3$ | N |
| 42 | $SO_2N(CH_3)_2$ | H | H | $CF_3$ | $OCH_3$ | N |
| 43 | Cl | H | H | $CF_3$ | $OCH_3$ | N |
| 44 | $N(CH_3)SO_2CH_3$ | H | H | $CF_3$ | $OCH_3$ | N |
| 45 | $OSO_2CH_3$ | H | H | $CF_3$ | $OCH_3$ | N |
| 46 | $OSO_2N(CH_3)_2$ | H | H | $CF_3$ | $OCH_3$ | N |
| 47 | $CF_3$ | H | H | $CF_3$ | $OCH_3$ | N |
| 48 | $CF_2H$ | H | H | $CF_3$ | $OCH_3$ | N |
| 49 | $CO_2CH_3$ | H | H | $CF_3$ | $OCH_3$ | CH |
| 50 | $CO_2C_2H_5$ | H | H | $CF_3$ | $OCH_3$ | CH |
| 51 | $CO_2iC_3H_7$ | H | H | $CF_3$ | $OCH_3$ | CH |
| 52 | $NO_2$ | H | H | $CF_3$ | $OCH_3$ | CH |
| 53 | $SO_2CH_3$ | H | H | $CF_3$ | $OCH_3$ | CH |
| 54 | $SO_2N(CH_3)_2$ | H | H | $CF_3$ | $OCH_3$ | CH |
| 55 | Cl | H | H | $CF_3$ | $OCH_3$ | CH |
| 56 | $N(CH_3)SO_2CH_3$ | H | H | $CF_3$ | $OCH_3$ | CH |
| 57 | $OSO_2CH_3$ | H | H | $CF_3$ | $OCH_3$ | CH |
| 58 | $OSO_2N(CH_3)_2$ | H | H | $CF_3$ | $OCH_3$ | CH |
| 59 | $CF_3$ | H | H | $CF_3$ | $OCH_3$ | CH |
| 60 | $CF_2H$ | H | H | $CF_3$ | $OCH_3$ | CH |
| 61 | $CO_2CH_3$ | H | H | $CF_2H$ | $OCH_3$ | N |
| 62 | $CO_2C_2H_5$ | H | H | $CF_2H$ | $OCH_3$ | N |
| 63 | $CO_2iC_3H_7$ | H | H | $CF_2H$ | $OCH_3$ | N |
| 64 | $NO_2$ | H | H | $CF_2H$ | $OCH_3$ | N |
| 65 | $SO_2CH_3$ | H | H | $CF_2H$ | $OCH_3$ | N |
| 66 | $SO_2N(CH_3)_2$ | H | H | $CF_2H$ | $OCH_3$ | N |
| 67 | Cl | H | H | $CF_2H$ | $OCH_3$ | N |
| 68 | $N(CH_3)SO_2CH_3$ | H | H | $CF_2H$ | $OCH_3$ | N |

(fortgesetzt)

| Nr. | $R^1$ | $R^2$ | $R^5$ | $R^3$ | $R^4$ | Z |
|---|---|---|---|---|---|---|
| 69 | $OSO_2CH_3$ | H | H | $CF_2H$ | $OCH_3$ | N |
| 70 | $OSO_2N(CH_3)_2$ | H | H | $CF_2H$ | $OCH_3$ | N |
| 71 | $CF_3$ | H | H | $CF_2H$ | $OCH_3$ | N |
| 72 | $CF_2H$ | H | H | $CF_2H$ | $OCH_3$ | N |
| 73 | $CO_2CH_3$ | H | H | $CF_2H$ | $OCH_3$ | CH |
| 74 | $CO_2C_2H_5$ | H | H | $CF_2H$ | $OCH_3$ | CH |
| 75 | $CO_2iC_3H_7$ | H | H | $CF_2H$ | $OCH_3$ | CH |
| 76 | $NO_2$ | H | H | $CF_2H$ | $OCH_3$ | CH |
| 77 | $SO_2CH_3$ | H | H | $CF_2H$ | $OCH_3$ | CH |
| 78 | $SO_2N(CH_3)_2$ | H | H | $CF_2H$ | $OCH_3$ | CH |
| 79 | Cl | H | H | $CF_2H$ | $OCH_3$ | CH |
| 80 | $N(CH_3)SO_2CH_3$ | H | H | $CF_2H$ | $OCH_3$ | CH |
| 81 | $OSO_2CH_3$ | H | H | $CF_2H$ | $OCH_3$ | CH |
| 82 | $OSO_2N(CH_3)_2$ | H | H | $CF_2H$ | $OCH_3$ | CH |
| 83 | $CF_3$ | H | H | $CF_2H$ | $OCH_3$ | CH |
| 84 | $CF_2H$ | H | H | $CF_2H$ | $OCH_3$ | CH |
| 85 | $CO_2CH_3$ | H | H | $CF_2Cl$ | $OCH_3$ | N |
| 86 | $CO_2C_2H_5$ | H | H | $CF_2Cl$ | $OCH_3$ | N |
| 87 | $CO_2iC_3H_7$ | H | H | $CF_2Cl$ | $OCH_3$ | N |
| 88 | $NO_2$ | H | H | $CF_2Cl$ | $OCH_3$ | N |
| 89 | $SO_2CH_3$ | H | H | $CF_2Cl$ | $OCH_3$ | N |
| 90 | $SO_2N(CH_3)_2$ | H | H | $CF_2Cl$ | $OCH_3$ | N |
| 91 | Cl | H | H | $CF_2Cl$ | $OCH_3$ | N |
| 92 | $N(CH_3)SO_2CH_3$ | H | H | $CF_2Cl$ | $OCH_3$ | N |
| 93 | $OSO_2CH_3$ | H | H | $CF_2Cl$ | $OCH_3$ | N |
| 94 | $OSO_2N(CH_3)_2$ | H | H | $CF_2Cl$ | $OCH_3$ | N |
| 95 | $CF_3$ | H | H | $CF_2Cl$ | $OCH_3$ | N |
| 96 | $CF_2H$ | H | H | $CF_2Cl$ | $OCH_3$ | N |
| 97 | $CO_2CH_3$ | 3-F | H | Cl | $OCH_3$ | CH |
| 98 | $CF_2CF_3$ | H | H | $CH_3$ | $OCH_3$ | N |
| 99 | $CF_2CF_3$ | H | H | $CH_3$ | $OCH_3$ | N |
| 100 | $SO_2C_2H_5$ | H | H | F | $OCH_3$ | CH |

Eine bevorzugte Verbindung (b) ist Pendimethalin.

Die vorliegende Erfindung ist auch auf herbizide Mittel gerichtet, die mindestens eine herbizid wirksame Menge eines Sulfonylharnstoffs (a) der oben beschriebenen Formel I oder deren umweltverträglichen Salze, eine synergistisch wirksame Menge mindestens einer oben beschriebenen herbiziden Verbindung (b) oder deren umweltverträglichen Salze, mindestens einen flüssigen und/oder festen Trägerstoff und gewünschtenfalls mindestens ein Adjuvant enthalten.

In den erfindungsgemäßen herbiziden Mischungen und herbiziden Mitteln werden die Sulfonylharnstoffe der Formel I oder deren umweltverträglichen Salze und die herbiziden Verbindungen b17oder deren umweltverträglichen

Salze in solchen Gewichtsanteilen verwendet, dass der gewünschte synergistische Effekt auftritt. Vorzugsweise liegen die Mischungsverhältnisse von Sulfonylharnstoff der Formel I und einer herbiziden Verbindung b17 1 bis 1 : 0.1 bis 1 : 40, insbesondere bei 1 : 0,2 bis 1 : 20, besonders bevorzugt bei 1 : 0,5 bis 1 : 15.

Die erfindungsgemäßen herbiziden Mischungen und herbiziden Mittel aus den Sulfonylharnstoffen der Formel I, bzw. deren umweltverträglichen Salze von beispielsweise Alkalimetallen, Erdalkalimetallen oder Ammoniak und Aminen und die herbiziden Verbindungen b17 bzw. deren umweltverträglichen Salze von beispielsweise Alkalimetallen, Erdalkalimetallen oder Ammoniak und Aminen können in der Kultur Reis, Unkräuter und Schadgräser sehr gut bekämpfen, ohne die Kultrupflanze zu schädigen, ein Effekt, der vor allem auch bei niedrigen Aufwandmengen auftritt.

Unter Berücksichtigung der Vielseitigkeit der Applikationsmethode können die erfindungsgemäßen herbiziden Mischungen und herbiziden Mittel noch in einer weiteren Zahl von Kultrupflanzen zur Beseitigung unerwünschter Pflanzen eingesetzt werden. In Betracht kommen beispielsweise folgende Kulturen:

Allium cepa, Ananas comosus, Arachis hypogaea, Asparagus officinalsi, Beta vulgaris spp. altissima, Beta vulgaris spp. rapa, Brassica napus var. napus, Brassica napus var. napobrassica, Brassica rapa var. silvestris, Camellia sinensis, Carthamus tinctorius, Carya illioninensis, Citrus limon, Citrus sinensis, Coffea arabica (Coffea canophora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spp., Manihot esculenta, Medicago sativa, Musa spp., Nicotiana tabacum (N.rustica), Olea europaea, Oryza sativa, Phaseolus lunatus, Phaseolus vulgaris, Picea abies, Pinus spp., Pisum sativum, Prunus avium, Prunus persica, Pyrus communis, Ribes sylestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera, Zea mays.

Darüber hinaus können die erfindungsgemäßen herbiziden Mischungen und herbiziden Mittel auch in Kulturen, die durch Züchtung einschließlich gentechnischer Methoden gegen die Wirkung von Herbiziden tolerant sind, verwandt werden.

Die Applikation der erfindungsgemäßen herbiziden Mischungen und herbiziden Mittel kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, dass die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die erfindungsgemäßen Mittel können beispielsweise in Form von direkt versprühbaren wässrigen Lösungen, Pulvern, Suspensionen, auch hochprozentigen wässrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Als inerte Zusatzstoffe kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Paraffin, Tetrahydronaphthalin, alkylierte Naphthaline oder deren Derivate, alkylierte Benzole oder deren Derivate, Methanol, Ethanol, Propanol, Butanol, Cyclohexanol, Cyclohexanon oder stark polare Lösungsmittel, wie N-Methylpyrrolidon oder Wasser in Betracht.

Wässrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und

Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der herbiziden Mischung mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nussschalenmehl, Cellulosepulver oder andere feste Trägerstoffe.

Die Formulierungen enthalten im allgemeinen 0,01 bis 95 Gew.%, vorzugsweise 0,5 bis 90 Gew.%, der herbiziden Mischung.

Außerdem kann es von Nutzen sein, die erfindungsgemäßen herbiziden Mischungen und herbiziden Mittel auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden.

Die Aufwandmengen an reiner herbizider Mischung, d.h. ohne Formulierungshilfsmitteln, betragen je nach Bekämpfungszielen, Jahreszeit, Zielpflanzen und Wachstumsstadium 0,01 bis 5 kg/ha, vorzugsweise 0,03 bis 4 kg/ha, besonders bevorzugt 0,1 bis 3,0 kg/ha aktive Substanz (a.S.)

Die erfindungsgemäßen herbiziden Mittel werden den Pflanzen vornehmlich durch Blattspritzung zugeführt. Dabei kann die Ausbringung z.B. mit Wasser als Trägerstoff durch übliche Spritztechniken mit Spritzbrühenmengen von etwa 100 bis 1000 1/ha erfolgen. Eine Anwendung der Mittel im sogenannten "Low Volume"- und "Ultra-low-Volume"-Verfahren ist ebenso möglich wie ihre Applikation in Form von sogenannten Granulaten.

Anwendungsbeispiele

Die Applikation der Herbizidmischungen erfolgte im Nachlaufverfahren (Blattbehandlung), wobei die Sulfonylharnstoffderivate als 10- bis 75prozentige Granulate und die herbiziden Verbindungen b17 in der Formulierung, in der sie als Handelsprodukt vorliegen, ausgebracht wurden.

Es handelt sich um Freilandversuche mit Kleinparzellen auf einem Standort mit sandigem Lehm (pH 6,2 bis 7,0) bzw. sandigem Ton (pH 5,0 bis 6,7) als Boden.

Die Unkräuter hatten unterschiedliche Größen und Entwicklungsstadien, im Durchschnitt hatten sie 5 bis 20 cm je nach Wuchsform.

Die herbiziden Mittel wurden allein und gemeinsam, letzteres teils als Tankmischung, teils in Fertigformulierung, ausgebracht. Dies geschah in Wasser (350 l/ha) als Verteilungsmittel je nach Aufbereitung der Wirkstoffe in Form von Emulsionen, wässrigen Lösungen oder Suspensionen. Die Ausbringung erfolgte mit Hilfe einer fahrbaren Parzellenspritzmaschine.

Die Versuchsperiode erstreckte sich über 3 bis 8 Wochen, wobei die Bestände auch noch zu späteren Zeiten beobachtet wurden.

Die Schädigung durch die herbiziden Mittel wurde anhand einer Skala von 0 % bis 100 % im Vergleich zu unbehandelten Kontrollparzellen bewertet. Dabei bedeutet 0 keine Schädigung und 100 eine völlige Zerstörung der Pflanzen.

In den folgenden Beispielen wird die Wirkung der erfindungsgemäß verwendbaren herbiziden Mittel gezeigt, ohne die Möglichkeit weiterer Anwendungen auszuschließen.

Bei diesen Beispielen wurde nach der Methode von S.R. Colby (1967) : Calculating synergistic and antagonistic responses of herbicid combinations, Weeds 15, 20 ff derjenige Wert E errechnet, der bei einer nur additiven Wirkung der Einzelwirkstoffe zu erwarten ist.

Die Berechnung erfolgt nach

$$E = X + Y - \frac{XY}{100}$$

wobei

X = Prozentsatz Wirkung mit Präparat A bei einer Aufwandmenge a
Y = Prozentsatz Wirkung mit Präparat B bei einer Aufwandmenge b
E = zu erwartende Wirkung (in %) durch A + B bei Aufwandmengen a + b

bedeuten.

Ist der beobachtete Wert höher als der nach Colby errechnete Wert E, so liegt eine synergistische Wirkung vor.

Die erfindungsgemäßen herbiziden Mittel haben eine herbizide Wirkung, die höher ist als sie nach Colby auf Grund der beobachteten Wirkungen der Einzelkomponenten bei alleiniger Anwendung zu erwarten ist.

## Patentansprüche

1. Herbizide Mischung, enthaltend

a) mindestens ein Derivat des Sufonylharnstoffs der Formel I

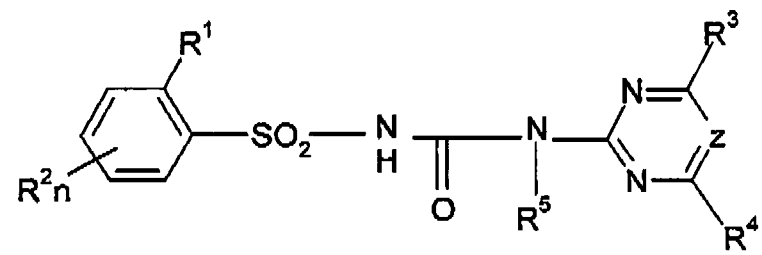

(I),

in der die Substituenten folgende Bedeutung haben:

$R^1$ $C_1$-$C_6$-Alkyl, das eine bis fünf der folgenden Gruppen tragen kann:

Methoxy, Ethoxy, $SO_2CH_3$, Cyano, Chlor, Fluor, $SCH_3$, $S(O)CH_3$;
Halogen;
eine Gruppe $ER^6$, in der E O, S oder $NR^7$ bedeutet;
$COOR^8$;
$NO_2$;
$S(O)_oR^9$, $SO_2NR^{10}R^{11}$, $CONR^{10}R^{11}$;

$R^2$ Wasserstoff, $C_1$-$C_4$-Alkyl, $C_2C_4$-Alkenyl, $C_2$-$C_4$-Alkinyl, Halogen, $C_1$-$C_4$-Alkoxy, $C_1$-$C_4$-Halogenalkoxy; $C_1$-$C_4$-Halogenalkyl, eine $C_1$-$C_2$-Alkylsulfonylgruppe, Nitro, Cyano oder $C_1$-$C_4$-Alkylthio,
$R^3$ F, $CH_3$, $CF_2Cl$, $CF_2H$, $OCF_3$, $OCF_2Cl$ oder falls $R^1$ für $CO_2CH_3$ und gleichzeitig $R^2$ für Fluor stehen, Cl, oder, falls $R^1$ für $CH_2CF_3$ oder $CF_2CF_3$ steht, Methyl, oder falls $R^4$ für $OCF_3$ oder $OCF_2Cl$ steht, $OCF_2H$ oder $OCF_2Br$;
$R^4$ $C_1$-$C_2$-Alkoxy, $C_1$-$C_2$-Alkyl, $C_1$-$C_2$-Alkylthio, $C_1$-$C_2$-Alkylamino, Di-$C_1$-$C_2$-Alkylamino, Halogen, $C_1$-$C_2$-Halogenalkyl, $C_1$-$C_2$-Halogenalkoxy,
$R^5$ Wasserstoff, $C_1$-$C_2$-Alkoxy, $C_1$-$C_4$-Alkyl;
$R^6$ $C_1$-$C_4$-Alkyl, $C_2$-$C_4$-Alkenyl, $C_2$-$C_4$-Alkinyl oder $C_3$-$C_6$-Cycloalkyl, welche 1 bis 5 Halogenatome tragen können, mit Ausnahme von Allyl, Difluormethoxy, Chlordifluormethoxy und 2-Chlorethoxy, falls E O oder S bedeutet. Ferner bedeutet $R^6$ im Falle, daß E für O oder $NR^7$ steht, noch Methylsulfonyl, Ethylsulfonyl, Trifluormethylsulfonyl, Allylsulfonyl, Propargylsulfonyl oder Dimethylsulfamoyl;
$R^7$ Wasserstoff, Methyl oder Ethyl
$R^8$ eine $C_1$-$C_8$-Alkylgruppe, welche bis zu drei der folgenden Reste tragen kann: Halogen, $C_1$-$C_4$-Alkoxy, $C_1$-$C_4$-Alkylthio, $C_1$-$C_4$-Halogenalkoxy, $C_1$-$C_4$-Alkoxy-$C_1$-$C_2$-alkoxy, $C_3$-$C_7$-Cycloalkyl und/oder Phenyl; eine $C_5$-$C_7$-Cycloalkylgruppe, welche bis zu drei $C_1$-$C_4$-Alkylgruppen tragen kann; $C_3$-$C_6$-Alkenyl oder $C_3$-$C_6$-Alkinyl;
$R^9$ eine $C_1$-$C_6$-Alkylgruppe, welche einen bis drei der folgenden Reste tragen kann: Halogen, $C_1$-$C_4$-Alkoxy, $C_1$-$C_4$-Alkylthio, $C_1$-$C_4$-Halogenalkoxy, $C_1$-$C_4$-Alkoxy-$C_1$-$C_2$-alkoxy, $C_3$-$C_7$-Cycloalkyl und/oder Phenyl; eine $C_5$-$C_7$-Cycloalkylgruppe, welche ein bis drei $C_1$-$C_4$-Alkylgruppen tragen kann; eine $C_2$-$C_6$-Alkenylgruppe oder eine $C_3$-$C_6$-Alkinylgruppe;
$R^{10}$ Wasserstoff, eine $C_1$-$C_2$-Alkoxygruppe, eine $C_1$-$C_6$-Alkylgruppe, oder gemeinsam mit $R^{11}$ eine $C_4$-$C_6$-Alkylenkette, worin eine Methylengruppe durch ein Sauerstoffatom oder eine $C_1$-$C_4$-Alkyliminogruppe ersetzt sein kann;
$R^{11}$ eine $C_1$-$C_4$-Akylgruppe, welche ein bis vier Halogen- oder $C_1$-$C_4$-Alkoxyreste tragen kann; $C_3$-$C_6$-Cy-

cloalkyl
n 0-3
o 1-2
Z N, CH

oder deren umweltverträglichen Salze
und
b) eine synergistisch wirksame Menge mindestens einer herbiziden Verbindung aus der Gruppe b17 Dinitroaniline: benefin, butralin, dinitramin, ethalfluralin, fluchloralin, isopropalin, nitralin, oryzalin, pendimethalin, prodiamine, profluralin, trifluralin

oder deren umweltverträglichen Salze.

**2.** Herbizide Mischung nach Anspruch 1, enthaltend einen Sulfanylhamstoff der Formel I, in der

$R^1$ $CO_2CH_3$, $CO_2C_2H_5$, $CO_2iC_3H_7$, $CF_3$, $CF_2H$; $OSO_2CH_3$, $OSO_2N\ (CH_3)_2$, Cl, $NO_2$ $SO_2N(CH_3)_2$, $SO_2CH_3$ und $N(CH_3)SO_2CH_3$
$R^2$ Wasserstoff, Cl, F oder $C_1$-$C_2$-Alkyl
$R^3$ $CF_2H$, $OCF_3$, $OCF_2Cl$, $CF_2Cl$, $CF_3$ oder F
$R^4$ $OCH_3$, $OC_2H_5$, $OCF_3$, $OCF_2Cl$; $CF_3$, Cl, F, $NH(CH_3)$, $N(CH_3)_2$ oder $C_1$-$C_2$-Alkyl
R5 Wasserstoff
z N oder CH
n 0 oder 1

bedeuten.

**3.** Herbizide Mischung nach Anspruch 1 oder 2, enthaltend einen Sulfonylharnstoff der Formel I, in der

$R^1$ $CF_3$,
$R^2$ Wasserstoff,
R3 $CF_3$,
$R^4$ $OCH_3$,
$R^5$ Wasserstoff und
Z N

bedeuten.

**4.** Herbizide Mischung nach einem der Ansprüche 1 bis 3, enthaltend die herbizide Verbindung Pendimethalin.

**5.** Herbizide Mischung nach einem der Ansprüche 1 bis 4, enthaltend einen Sulfonylharnstoff (a) der Formel I und eine oder mehrere herbizide Verbindungen b17 im Gewichtsverhältnis 1 : 0,1 bis 1 : 40.

**6.** Herbizide Mischung nach Anspruch 5, enthaltend einen Sulfonylharnstoff (a) der Formel I und eine oder mehrere herbizide Verbindungen b17 im Gewichtsverhältnis 1 : 0,2 bis 1 : 20.

**7.** Herbizides Mittel, enthaltend eine herbizid wirksame Menge eines Sulfonylharnstoffs (a) der Formel I gemäß einem der Ansprüche 1 bis 3, eine synergistisch wirksame Menge mindestens einer herbiziden Verbindung b17 gemäß Anspruch 1 oder 4, mindestens einen flüssigen und/oder festen Trägerstoff und gewünschtenfalls mindestens ein Adjuvants.

**8.** Herbizides Mittel nach Anspruch 7, **dadurch gekennzeichnet, dass** es den Sulfonylharnstoff (a) der Formel I und eine oder mehrere herbizide Verbindungen b17 im Gewichtsverhältnis 1 : 0,1 bis 1 : 40 enthält.

**9.** Herbizides Mittel nach Anspruch 7 oder 8, **dadurch gekennzeichnet, dass** es den Sulfonylharnstoff (a) der Formel I und eine oder mehrere herbizide Verbindungen b17 im Gewichtsverhältnis 1 : 0,2 bis 1 : 20 enthält.

**10.** Verfahren zur Bekämpfung unerwünschten Pflanzenwuchses, **dadurch gekennzeichnet, dass** man eine Mischung gemäß einem der Ansprüche 1 bis 6 oder ein Mittel gemäß einem der Ansprüche 7 bis 9 im Vorauflauf- oder im

Nachauflaufverfahren anwendet.

**11.** Verfahren zur Bekämpfung unerwünschten Pflanzenwuchses, **dadurch gekennzeichnet, dass** man eine Mischung gemäß einem der Ansprüche 1 bis 6 oder ein Mittel gemäß einem der Ansprüche 7 bis 9 den Pflanzen durch Blattspritzung zuführt.

**Claims**

**1.** A herbicidal mixture comprising

a) at least one derivative of the sulfonylurea of the formula I

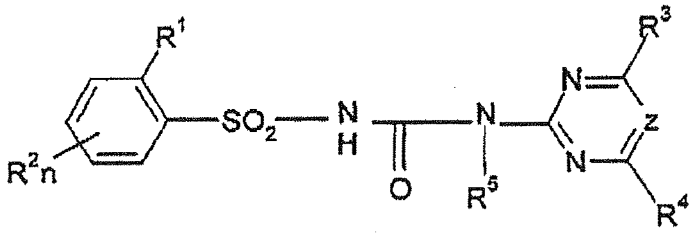

(I),

where the substituents have the following meanings:

$R^1$ is $C_1$-$C_6$-alkyl which has attached to it one to five of the following groups:

methoxy, ethoxy, $SO_2CH_3$, cyano, chlorine, fluorine, $SCH_3$, $S(O)CH_3$;
halogen;
a group $ER^6$ where E is O, S or $NR^7$;
$COOR^8$;
$NO_2$ ;
$S(O)_oR^9$, $SO_2NR^{10}R^{11}$, $CONR^{10}R^{11}$;

$R^2$ is hydrogen, $C_1$-$C_4$-alkyl, $C_2$-$C_4$-alkenyl, $C_2$-$C_4$-alkynyl, halogen, $C_1$-$C_4$-alkoxy, $C_1$-$C_4$-haloalkoxy; $C_1$-$C_4$-haloalkyl, a $C_1$-$C_2$-alkylsulfonyl group, nitro, cyano or $C_1$-$C_4$-alkylthio;
$R^3$ is F, $CH_3$, $CF_2Cl$, $CF_2H$, $OCF_3$, $OCF_2Cl$, or, if $R^1$ is $CO_2CH_3$ and $R^2$ is simultaneously fluorine, $R^3$ is Cl, or, if $R^1$ is $CH_2CF_3$ or $CF_2CF_3$, $R^3$ is methyl, or, if $R^4$ is $OCF_3$ or $OCF_2Cl$, $R^3$ is $OCF_2H$ or $OCF_2Br$;
$R^4$ is $C_1$-$C_2$-alkoxy, $C_1$-$C_2$-alkyl, $C_1$-$C_2$-alkylthio, $C_1$-$C_2$-alkylamino, di-$C_1$-$C_2$-alkylamino, halogen, $C_1$-$C_2$-haloalkyl, $C_1$-$C_2$-haloalkoxy,
$R^5$ is hydrogen, $C_1$-$C_2$-alkoxy, $C_1$-$C_4$-alkyl;
$R^6$ is $C_1$-$C_4$-alkyl, $C_2$-$C_4$-alkenyl, $C_2$-$C_4$-alkynyl or $C_3$-$C_6$-cycloalkyl, all of which can have attached to them 1 to 5 halogen atoms, with the exception of allyl, difluoromethoxy, chlorodifluoromethoxy and 2-chloroethoxy, if E is O or S. In the event that E is O or $NR^7$, $R^6$ is furthermore also methylsulfonyl, ethylsulfonyl, trifluoromethylsulfonyl, allylsulfonyl, propargylsulfonyl or dimethylsulfamoyl;
$R^7$ is hydrogen, methyl or ethyl
$R^8$ is a $C_1$-$C_6$-alkyl group which can have attached to it up to three of the following radicals: halogen, $C_1$-$C_4$-alkoxy, $C_1$-$C_4$-alkylthio, $C_1$-$C_4$-haloalkoxy, $C_1$-$C_4$-alkoxy-$C_1$-$C_2$-alkoxy, $C_3$-$C_7$-cycloalkyl and/or phenyl; a $C_5$-$C_7$-cycloalkyl group which can have attached to it up to three $C_1$-$C_4$-alkyl groups; $C_3$-$C_6$-alkenyl or $C_3$-$C_6$-alkynyl;
$R^9$ is a $C_1$-$C_6$-alkyl group which can have attached to it one to three of the following radicals: halogen, $C_1$-$C_4$-alkoxy, $C_1$-$C_4$-alkylthio, $C_1$-$C_4$-haloalkoxy, $C_1$-$C_4$-alkoxy-$C_1$-$C_2$-alkoxy, $C_3$-$C_7$-cycloalkyl and/or phenyl; a $C_5$-$C_7$-cycloalkyl group which can have attached to it one to three $C_1$-$C_4$-alkyl groups; a $C_2$-$C_6$-alkenyl group or a $C_3$-$C_6$-alkynyl group;
$R^{10}$ is hydrogen, a $C_1$-$C_2$-alkoxy group, a $C_1$-$C_6$-alkyl group, or together with $R^{11}$ is a $C_4$-$C_6$-alkylene chain in which one methylene group can be replaced by an oxygen atom or a $C_1$-$C_4$-alkylimino group;
$R^{11}$ is a $C_1$-$C_4$-alkyl group which can have attached to it one to four halogen or $C_1$-$C_4$-alkoxy radicals;

$C_3$-$C_6$-cycloalkyl
n is 0 - 3
O is 1 - 2
Z is N or CH,

or their environmentally compatible salts
and
b) a synergistically active amount of at least one herbicidal compound from group b17 dinitroanilines: benefin, butralin, dinitramin, ethalfluralin, fluchloralin, isopropalin, nitralin, oryzalin, pendimethalin, prodiamine, profluralin, trifluralin
or their environmentally compatible salts.

**2.** The herbicidal mixture according to claim 1, comprising a sulfonylurea of the formula I where

$R^1$ is $CO_2CH_3$, $CO_2C_2H_5$, $CO_2iC_3H_7$, $CF_3$, $CF_2H$; $OSO_2CH_3$, $OSO_2N(CH_3)_2$, Cl, $NO_2$ , $SO_2N(CH_3)_2$, $SO_2CH_3$ and $N(CH_3)SO_2CH_3$,
$R^2$ is hydrogen, Cl, F or $C_1$-$C_2$-alkyl
$R^3$ is $CF_2H$, $OCF_3$, $OCF_2Cl$, $CF_2Cl$, $CF_3$ or F,
$R^4$ is $OCH_3$ , $OC_2H_5$, $OCF_3$ , $OCF_2Cl$; $CF_3$, Cl, F, $NH(CH_3)$, $N(CH_3)_2$ or $C_1$-$C_2$-alkyl,
$R^5$ is hydrogen,
Z is N or CH and
n is 0 or 1.

**3.** The herbicidal mixture according to claim 1 or 2, comprising a sulfonylurea of the formula I where

$R^1$ is $CF_3$,
$R^2$ is hydrogen,
$R^3$ is $CF_3$ ,
$R^4$ is $OCH_3$ ,
$R^5$ is hydrogen and
Z is N.

**4.** The herbicidal mixture according to any of claims 1 to 3, comprising the herbicidal compound pendimethalin.

**5.** The herbicidal mixture according to any of claims 1 to 4, comprising a sulfonylurea (a) of the formula I and one or more herbicidal compounds b17 in a weight ratio of 1:0.1 to 1:40.

**6.** The herbicidal mixture according to claim 5, comprising a sulfonylurea (a) of the formula I and one or more herbicidal compounds b17 in a weight ratio of 1:0.2 to 1:20.

**7.** A herbicidal composition comprising a herbicidally active amount of a sulfonylurea (a) of the formula I according to any of claims 1 to 3, a synergistically active amount of at least one herbicidal compound b17 according to claim 1 or 4, at least one liquid and/or solid carrier and, if desired, at least one adjuvant.

**8.** The herbicidal composition according to claim 7, which comprises the sulfonylurea (a) of the formula I and one or more herbicidal compounds b17 in a weight ratio of 1:0.1 to 1:40.

**9.** The herbicidal composition according to claim 7 or 8, which comprises the sulfonylurea (a) of the formula I and one or more herbicidal compounds b17 in a weight ratio of 1:0.2 to 1:20.

**10.** A method of controlling undesirable vegetation, which comprises applying a mixture according to any of claims 1 to 6 or a composition according to any of claims 7 to 9 by the pre- or post-emergence method.

**11.** A method of controlling undesirable vegetation, which comprises supplying, to the plants, a mixture according to any of claims 1 to 6 or a composition according to any of claims 7 to 9 by foliar spray treatment.

## Revendications

1. Mélange herbicide, contenant

a) au moins un dérivé de la sulfonylurée de la formule I

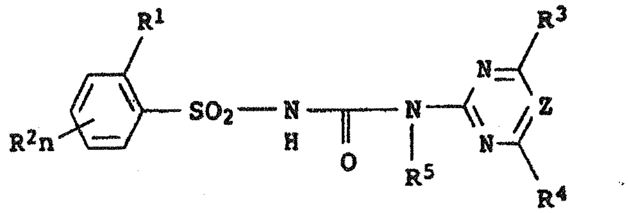

(I),

dans laquelle les substituants ont la signification suivante :

$R^1$ alkyle en $C_1$ à $C_6$, qui peut porter jusqu'à cinq des groupes suivants : méthoxy, éthoxy, $SO_2CH_3$, cyano, chloro, fluoro, $SCH_3$ , $S(O)CH_3$, halogène
un groupe $ER^6$, dans lequel E représente O, S ou $NR^7$,
$COOR^8$,
$NO_2$,
$S(O)_oR^9$, $SO_2NR^{10}R^{11}$, $CONR^{10}R^{11}$,
$R^2$ hydrogène, alkyle en $C_1$ à $C_4$, alcényle en $C_2$ à $C_4$, alcynyle en $C_2$ à $C_4$, halogène, alcoxy en $C_1$ à $C_4$, halogénoalcoxy en $C_1$ à $C_4$, halogénoalkyle en $C_1$ à $C_4$, un groupe alkylsulfonyle en $C_1$ à $C_2$, nitro, cyano ou alkylthio en $C_1$ à $C_4$,
$R^3$ représente F, $CH_3$, $CF_2Cl$, $CF_2H$, $OCF_3$, $OCF_2Cl$ ou, lorsque $R^1$ représente $CO_2CH_3$ et qu'en même temps $R^2$ représente du fluor, Cl, ou dans le cas où $R^1$ représente $CH_2CF_3$ ou $CF_2CF_3$, du méthyle, ou dans le cas où $R^4$ représente $OCF_3$ ou $OCF_2Cl$, $OCF_2H$ ou $OCF_2Br$,
$R^4$ alcoxy en $C_1$ à $C_2$, alkyle en $C_1$ à $C_2$, alkylthio en $C_1$ à $C_2$, alkylamino en $C_1$ à $C_2$, di-($C_1$-$C_2$)alkylamino, halogène, halogénoalkyle en $C_1$ à $C_2$, halogénoalcoxy en $C_1$ à $C_2$,
$R^5$ hydrogène, alcoxy en $C_1$ à $C_2$, alkyle en $C_1$ à $C_4$,
$R^6$ alkyle en $C_1$ à $C_4$, alcényle en $C_2$ à $C_4$, alcynyle en $C_2$ à $C_4$ ou cycloalkyle en $C_3$ à $C_6$, qui peuvent porter de 1 à 5 atomes d'halogène, à l'exception de l'allyle, du difluorométhoxy, du chlorodifluorométhoxy et du 2-chloroéthoxy, lorsque E représente 0 ou S. En outre, $R^6$ représente, lorsque E représente 0 ou $NR^7$, encore du méthylsulfonyle, de l'éthylsulfonyle, du trifluorométhylsulfonyle, de l'allylsulfonyle, du propargylsulfonyle ou du diméthylsulfamoyle,
$R^7$ représente de l'hydrogène, du méthyle ou de l'éthyle,
$R^8$ représente un groupe alkyle en $C_1$ à $C_6$, qui peut porter jusqu'à trois des restes suivants: halogène, alcoxy en $C_1$ à $C_4$, alkylthio en $C_1$ - $C_4$, halogénoalcoxy en $C_1$ à $C_4$, ($C_1$-$C_4$) alcoxy-($C_1$-$C_2$) alcoxy, cycloalkyle en $C_3$ à $C_7$ et/ou phényle, un groupe cycloalkyle en $C_5$ à $C_7$, qui peut porter jusqu'à trois groupes alkyle en $C_1$ à $C_4$, alcényle en $C_3$ à $C_6$ ou alcynyle en $C_3$ à $C_6$,
$R^9$ représente un groupe alkyle en $C_1$ à $C_6$, qui peut porter de un à trois des restes suivants: halogène, alcoxy en $C_1$ à $C_4$, alkylthio en $C_1$ à $C_4$, halogénoalcoxy en $C_1$ à $C_4$, ($C_1$-$C_4$) alcoxy- ($C_1$-$C_2$) alcoxy, cycloalkyle en $C_3$ à $C_7$ et/ou phényle, un groupe cycloalkyle en $C_5$ à $C_7$, qui peut porter de un à trois groupes alkyle $C_1$ à $C_4$, un groupe alcényle en $C_2$ à $C_6$ ou un groupe alcynyle en $C_3$ à $C_6$,
$R^{10}$ représente de l'hydrogène ou un groupe alcoxy en $C_1$ à $C_2$, un groupe alkyle en $C_1$ à $C_6$, ou forme ensemble avec $R^{11}$ une chaîne alkylène en $C_4$ à $C_6$, dans laquelle un groupe méthylène peut être remplacé par un atome d'oxygène ou un groupe alkylamino en $C_1$ à $C_4$,
$R^{11}$ représente un groupe alkyle en $C_1$ à $C_4$, qui peut porter de un à quatre atomes d'halogène ou restes alcoxy en $C_1$ à $C_4$, cycloalkyle en $C_3$ à $C_6$,
n vaut de 0 à 3,
o vaut de 1 à 2,
Z représente N, CH,

ou ses sels écologiquement compatibles, et
b) une quantité synergiquement active d'au moins un composé herbicide du groupe b17 des dinitroanilines : la bénéfine, la butraline, la dinitramine, l'éthalfluraline, la fluchloraline, isopropaline, La nitraline, l'oryzaline, la

pendiméthaline, la prodiamine, la profluraline, la trifluraline,

ou de leurs sels écologiquement compatibles.

**2.** Mélange herbicide selon la revendication 1, contenant une sulfonylurée de la formule I dans laquelle :

$R^1$ représente $CO_2CH_3$, $CO_2C_2H_5$, $CO_2iC_3H_7$, $CF_3$, $CF_2H$ ; $OSO_2CH_3$, $OSO_2N(CH_3)_2$, Cl, $NO_2$ , $SO_2N(CH_3)_2$, $SO_2CH_3$ et $N(CH_3)$ $SO_2CH_3$,
$R^2$ représente de l'hydrogène, Cl, F ou alkyle en $C_1$ à $C_2$,
$R^3$ représente $CF_2H$, $OCF_3$, $OCF_2Cl$, $CF_2CL$, $CF_3$ ou F,
$R^4$ représente $OCH_3$, $OC_2H_5$, $OCF_3$, $OCF_2CL$ ; $CF_3$, CL, F, $NH(CH_3)$, $N(CH_3)_2$ ou alkyle en $C_1$ à $C_2$
$R^5$ représente de l'hydrogène,
Z représente N ou CH et
n vaut 0 ou 1.

**3.** Mélange herbicide selon la revendication 1 ou 2, contenant une sulfonylurée de la formule I dans laquelle :

$R^1$ représente $CF_3$,
$R^2$ représente de l'hydrogène,
$R^3$ représente $CF^3$,
$R^4$ représente $OCH_3$,
$R^5$ représente de l'hydrogène et
Z représente N.

**4.** Mélange herbicide selon l'une quelconque des revendications 1 à 3, contenant le composé herbicide pendiméthaline.

**5.** Mélange herbicide selon l'une quelconque des revendications 1 à 4, contenant une sulfonylurée (a) de la formule I et un ou plusieurs composés herbcides b17 en proportion pondérale de 1:0,1 à 1:40.

**6.** Mélange herbicide selon la revendication 5, contenant une sulfonylurée (a) de la formule I et un ou plusieurs composés herbicides b17 en proportion pondérale de 1:0,2 à 1:20.

**7.** Agent herbicide contenant une quantité à activité herbicide d'une sulfonylurée (a) de la formule I selon l'une quelconque des revendications 1 à 3, une quantité synergiquement active d'au moins un composé herbicide b17 selon la revendications 1 ou 4, au moins un véhicule liquide et/ou solide et le cas échéant au moins un adjuvant.

**8.** Agent herbicide selon la revendication 7, **caractérisé en ce qu'**il contient la sulfonylurée (a) de la formule I et un ou plusieurs composés herbicides b17 en une proportion pondérale de 1:0,1 à 1:40.

**9.** Agent herbicide selon la revendication 7 ou 8, **caractérisé en ce qu'**il contient la sulfonylurée (a) de la formule I et un ou plusieurs composés herbicides b17 en une proportion pondérale de 1:0,2 à 1:20.

**10.** Procédé de lutte contre des végétaux indésirables, **caractérisé en ce que** l'on utilise un mélange selon l'une quelconque des revendications 1 à 6 ou un agent selon l'une quelconque des revendications 7 à 9 avant ou après la levee.

**11.** Procédé de lutte contre des végétaux indésirables, **caractérisé en ce que** l'on alimente des plantes par un mélange selon l'une quelconque des revendications 1 à 4 ou par un agent selon l'une quelconque des revendications 7 à 9 par pulvérisation sur les feuilles.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 388873 A
- EP 559814 A
- EP 291851 A
- DE 4007683


### In der Beschreibung aufgeführte Nicht-Patentliteratur


- New Fluoro Intermediates for Herbicidal Sulfonylureas. *Fluorine in Agriculture,* 09. Januar 1995
- **S.R. COLBY.** Calculating synergistic and antagonistic responses of herbicid combinations. *Weeds,* 1967, vol. 15, 20 ff